Europäisches Patentamt

European Patent Office

Office européen des brevets

(19)

(11) Veröffentlichungsnummer : **0 135 795**
**B1**

(12)

# EUROPÄISCHE PATENTSCHRIFT

(45) Veröffentlichungstag der Patentschrift :
03.12.86

(21) Anmeldenummer : 84109907.0

(22) Anmeldetag : 20.08.84

(51) Int. Cl.⁴ : **H 02 H   1/00**

---

(54) Schalteinrichtung zum Erfassen von Fehlerlichtbogen in elektrischen Anlagen.

---

(30) Priorität : 30.08.83 DE 3331221

(43) Veröffentlichungstag der Anmeldung :
03.04.85 Patentblatt 85/14

(45) Bekanntmachung des Hinweises auf die Patenterteilung : 03.12.86 Patentblatt 86/49

(84) Benannte Vertragsstaaten :
AT DE FR NL SE

(56) Entgegenhaltungen :
DE-A- 2 216 238
DE-A- 2 840 790
DE-A- 2 851 537
FR-A- 2 497 014
ELEKTROTECHNISCHE ZEITSCHRIFT A, Band 98, Nr. 7, Juli 1977, Seiten 491-494, VDE Verlag, Berlin, DE; P. GEHRMANN: "Ortung von elektrischen Überschlägen in metallgekapselten SF6-Hochspannungsanlagen"

(73) Patentinhaber : Siemens Aktiengesellschaft Berlin und München
Wittelsbacherplatz 2
D-8000 München 2 (DE)

(72) Erfinder : Bayer, Helmut
Gartenstrasse 18
D-6238 Hofheim/Taunus (DE)
Erfinder : Kairies, Bernd-Jürgen
Friedberger Strasse 7
D-6382 Friedrichsdorf 2 (DE)

EP 0 135 795 B1

Jouve, 18, rue St-Denis, 75001 Paris, France

## Beschreibung

Die Erfindung bezieht sich auf eine Schalteinrichtung zum Erfassen von Fehlerlichtbogen in elektrischen Anlagen nach dem Oberbegriff des Patentanspruches.

Bislang wurden zum Erfassen von Fehlerlichtbogen in elektrischen Anlagen der anstehende Strom und auftretendes Licht als Kriterien für das Anstehen eines Fehlerlichtbogens verwendet. Es wurde dabei davon ausgegangen, daß nur oberhalb eines bestimmten Überstromes und eines eine Mindeststärke überschreitenden Lichtes, als Folge beispielsweise eines Kurzschlusses, ein Fehlerlichtbogen anstehen kann, vor dem die zugeordnete Anlage zu schützen ist. Einrichtungen, die zum Schutze von Anlagen vor Fehlerlichtbogen sowohl Strom als auch Licht als Maßstab verwenden, sind aufwendig.

Es ist auch eine Schalteinrichtung zum Erfassen von Fehlerlichtbogen in elektrischen Anlagen nach dem Oberbegriff des Patentanspruches bekannt, bei der die Änderung der Helligkeit und die Aufsummierung der Änderungen der Helligkeit als Maßstab dafür herangezogen wird, ob ein Fehlerlichtbogen ansteht oder nicht. Zur Vereinfachung wurde hier bewußt auf das Kriterium Strom verzichtet (DE-B-28 40 790).

Aufgabe der Erfindung ist es, die Schalteinrichtung zum Erfassen von Fehlerlichtbogen in elektrischen Anlagen der im Oberbegriff des Patentanspruches genannten Art so auszubilden, daß sie ebenfalls, jedoch auf andere Weise, nur mit dem Licht als alleiniges Kriterium für das Anstehen eines Fehlerlichtbogens auskommt. Die angestrebte Lösung der Aufgabe soll für die Erfassung von Fehlerlichtbogen in elektrischen Anlagen einen weiteren gangbaren Weg aufzeigen, der noch einfacher und sicherer ist.

Die gestellte Aufgabe wird erfindungsgemäß durch die im kennzeichnenden Teil des Patentanspruches angegebene Ausbildung gelöst.

Die gefundene Lösung hebt sich vom Bekannten besonders dadurch ab, daß bei ihr ultraviolettes Licht und dessen Schwankungen als Kriterium für das Anstehen eines Fehlerlichtbogens dienen. Die Schalteinrichtung nach der Lehre des Patentanspruches kann in sehr hohem Maße Licht eines Fehlerlichtbogens von Licht unterscheiden, dessen Quellen für die zu schützende Anlage ungefährlich sind. Die Gefahr von Fehlabschaltungen der Anlage wegen eines vermeintlichen Fehlerlichtbogens ist damit praktisch beseitigt.

Ein Ausführungsbeispiel der Erfindung ist in einem Blockschaltbild dargestellt.

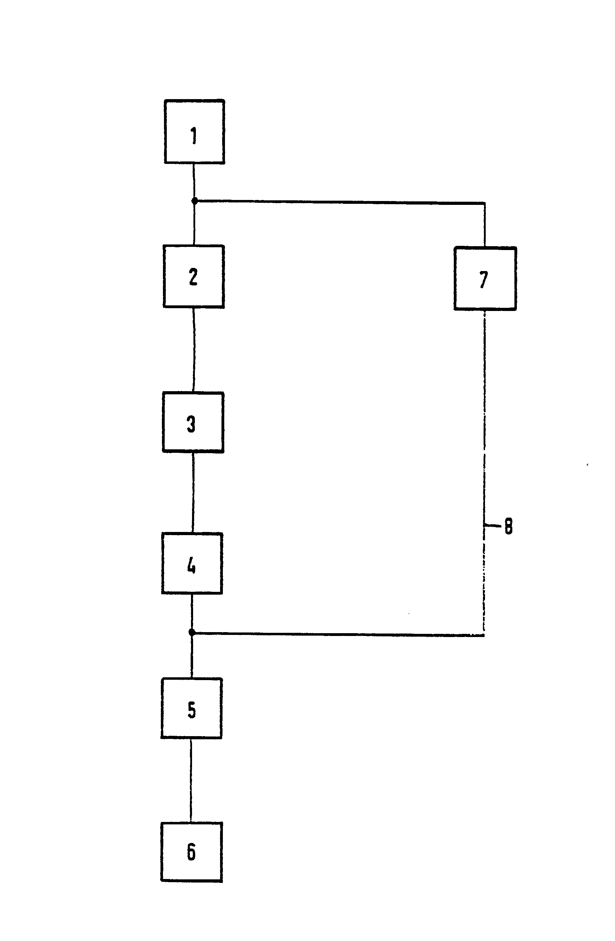

In der Zeichnung ist mit 1 ein photoelektrischer Empfänger einer Schalteinrichtung zum Erfassen von Fehlerlichtbogen in elektrischen Anlagen bezeichnet. Dieser Empfänger 1 setzt auf ihn auftreffendes Licht, auch ultraviolettes Licht, in der jeweiligen Lichtstärke entsprechende Spannung um. Als Empfänger 1 ist ein entsprechend dotierter Silizium-Halbleiter geeignet,

beispielsweise eine Fotodiode oder ein Fotoelement.

Auf nicht dargestellte Weise ist dem Empfänger ein Filter vorgesetzt, der nur für ultraviolettes Licht durchlässig ist und somit anderes Licht vom Empfänger fernhält.

Der auf ultraviolettes Licht ansprechende Empfänger 1 und der Filter wurden aus der Erkenntnis heraus gewählt, daß das Licht eines Fehlerlichtbogens einen besonders hohen Anteil an ultraviolettem Licht besitzt, der schon für sich ein starkes Indiz für das Vorhandensein eines Fehlerlichtbogens ist.

Demgegenüber besitzen das Tageslicht, zur Beleuchtung verwendetes künstliches Licht und von anderen, in der Nähe einer elektrischen Anlage befindlichen Lichtquellen ausgehendes Licht weit weniger ultraviolette Anteile.

Die vom Empfänger 1 infolge Lichteinfalles abgegebene Spannung ist für eine Weiterverarbeitung zu einem Signal zu gering. Hinter dem Empfänger 1 ist deshalb ein erster Verstärker 2 vorgesehen, mit dem die vom Empfänger bei ultraviolettem Lichteinfall ausgehende Spannung auf eine für eine Signalverarbeitung verwendbaren Wert anhebbar ist.

An den ersten Verstärker schließt sich ein Hochpaß 3 an, der nur mittel- und hochfrequente Spannungsanteile durchläßt, die ein weiteres Indiz für das Anstehen eines Fehlerlichtbogens sind.

Dem Hochpaß 3 ist zunächst ein zweiter Verstärker 4 und sodann ein Start-Stop-Oszillator 5 nachgeordnet, der nach Maßgabe der an ihm anstehenden mittel- und hochfrequenten Spannungen Schwingungen konstanter Frequenz erzeugt, die mit einem Zähler 6 gezählt werden, der sich in Reihe hinter dem Oszillator 5 befindet.

Der Zähler 6 ist so ausgebildet, daß er dann ein Ausgangssignal abgibt, wenn er eine vorgegebene Anzahl von Schwingungen addiert hat. Bleibt die vom Zähler 6 festgestellte Anzahl Schwingungen unterhalb der vorgegebenen Anzahl, kann davon ausgegangen werden, daß der diese Schwingungen verursachende Einfall ultravioletten Lichtes in den Empfänger nicht von einem die zu schützende Anlage gefährdenden Fehlerlichtbogen stammt. Wird dagegen die vorgegebene Anzahl Schwingungen überschritten, ist das ein sicheres Anzeichen dafür, daß der Empfänger 1 vom Licht eines eventuell Schaden hervorrufenden Lichtbogens erregt wurde. Der Zähler 6 wird nach einer vorgegebenen Zeit zurückgesetzt.

Da jedoch auch von einem Fehlerlichtbogen ausgehendes Licht hohe niederfrequente Spannungen erzeugen kann, ist eine Schaltschwelle 7 in Form eines oberhalb einer vorgegebenen Spannung durchschaltenden Schmitt-Triggers vorgesehen. Die Schaltschwelle 7 ist in einer Leiterbahn 8 angeordnet, die den ersten Verstärker 2, den Hochpaß 3 und den zweiten Verstärker 4 überbrückt und an den Start-Stop-Oszillator direkt angeschlossen ist.

Wird zum Beispiel eine Verzugszeit von 20 ms vorgesehen, so ist bei einem bis 16 zählenden Zähler eine Frequenz des Start-Stop-Oszillators von

$$\frac{16 \text{ Schwingungen}}{20 \text{ ms}} = 0,8 \text{ kHz}$$

einzustellen.

## Patentanspruch

Schalteinrichtung zum Erfassen von Fehlerlichtbogen in elektrischen Anlagen, mit einem fotoelektrischen Empfänger (1), Mitteln zur Signalaufbereitung, wie mindestens einem Verstärker (2, 4) und mindestens einer Zeitstufe, und einem Signalgeber, gekennzeichnet durch die Merkmale :

a) als fotoelektrischer Empfänger (1) ist ein Sensor eingesetzt, der auch im Bereich des ultravioletten Lichtes anspricht und dem Licht entsprechende Spannungen abgibt,

b) dem Empfänger (1) ist ein nur ultraviolettes Licht durchlassender Filter vorgesetzt,

c) hinter dem Empfänger (1) ist ein erster Verstärker (2) angeordnet,

d) dem ersten Verstärker (2) ist ein nur mittel- und hochfrequente Spannungen durchlassender Hochpaß (3) nachgeordnet,

e) hinter dem Hochpaß (3) befindet sich ein Start-Stop-Oszillator (5),

f) anschließend an den Start-Stop-Oszillator (5) ist ein Zähler (6) vorgesehen, der zum Zählen der vom Start-Stop-Oszillator (5) ausgehenden Schwingungen und, nach Erreichen einer vorgegebenen Schwingungszahl, zur Abgabe eines Ausgangssignals ausgebildet ist,

g) parallel zum ersten Verstärker (2), dem Hochpaß (3) und zu einem hinter dem Hochpaß (3) angeordneten zweiten Verstärker (4) ist eine Schaltschwelle (7) in Form eines oberhalb einer vorgegebenen Spannung durchschaltenden Schmitt-Triggers vorgesehen.

## Claim

1. A switching device for detecting fault arcs in electrical installations, comprising a photo-electric receiver (1), means for signal processing, such as at least one amplifier (2, 4) and at least one timer stage and a signal generator, characterised by the following features :

a) a sensor which also responds in the region of ultraviolet light and emits voltages corresponding to the light is used as a photo-electric receiver (1) ;

b) the receiver (1) is preceded by a filter which only allows ultraviolet light to pass ;

c) the receiver (1) is followed by a first amplifier (2),

d) the first amplifier (2) is followed by a high-pass filter (3) which only allows voltages of medium and high frequency to pass through ;

e) a start-stop oscillator (5) is arranged following the high-pass filter (3) ;

f) the start-stop oscillator (5) is followed by a counter (6) designed to count the oscillations emanating from the start-stop oscillator (5) and transmit an output signal after having obtained a predetermined oscillation frequency ; and

g) a switching threshold (7) in the form of a Schmitt- trigger stage, which switches through above a predetermined voltage, arranged parallel to the first amplifier (2), the high-pass filter (3) and a second amplifier (4) arranged following the high-pass filter (3).

## Revendication

Montage pour détecter des arcs électriques de défaut dans des installations électriques, comprenant un récepteur photo-électrique (1), des moyens pour élaborer un signal, tels qu'au moins un amplificateur (2, 4) et au moins un étage de temps, ainsi qu'un générateur de signaux, caractérisé en ce que :

a) le récepteur photo-électrique (1) est un capteur qui réagit également dans le domaine de la lumière ultraviolette et qui délivre des tensions qui correspondent à la lumière,

b) le récepteur (1) est précédé d'un filtre qui laisse seulement passer la lumière ultraviolette,

c) le récepteur (1) est suivi d'un premier amplificateur (2),

d) le premier amplificateur (2) est suivi d'un filtre passe-haut (3) laissant seulement passer des tensions de fréquence moyenne et haute,

e) le filtre passe-haut (3) est suivi d'un oscillateur start-stop (5),

f) l'oscillateur start-stop (5) est suivi d'un compteur (6) conçu pour compter les oscillations délivrées par l'oscillateur start-stop (5) et pour délivrer un signal de sortie lorsqu'un nombre préfixé d'oscillations a été atteint et

g) un élément de commutation à seuil (7), sous forme d'une bascule de Schmitt commutée au-dessus d'une tension préfixée, est prévu en parallèle sur le premier amplificateur (2), sur le filtre passe-haut (3) sur un second amplificateur (4) disposé derrière le filtre passe-haut (3).